**Europäisches Patentamt**

**European Patent Office**

**Office européen des brevets**

(11) Publication number: **0 137 642**
**A2**

## (12) EUROPEAN PATENT APPLICATION

(21) Application number: **84305517.9**

(22) Date of filing: **14.08.84**

(51) Int. Cl.⁴: **B 26 D 7/06**

(30) Priority: **15.08.83 NZ 205264**

(43) Date of publication of application:
**17.04.85 Bulletin 85/16**

(84) Designated Contracting States:
**AT BE CH DE FR IT LI LU NL SE**

(71) Applicant: **AEW Engineering Company Limited**
**Horizon Works Dereham Road**
**Costessey Norwich Norfolk(GB)**

(71) Applicant: **Systems Technology (NZ) Limited**
**Seymour Building Corner Wellington Street and Fencible**
**Drive**
**Howick Auckland(NZ)**

(72) Inventor: **Avenell, Eric Gwyn**
**176 Carnoustie Drive**
**NZ-Wattle Downs Auckland(NZ)**

(74) Representative: **Matthews, Heather Clare et al,**
**Keith W Nash & Co Pearl Assurance House 90-92 Regent**
**Street**
**Cambridge CB2 1DP(GB)**

(54) **Method and apparatus for presenting articles.**

(57) Presenting apparatus comprises a rotatable member such as a circular table (1) having at least one sliding member (2) mounted thereon which is arranged to be reciprocated radially with respect to the axis of rotation of the rotatable member. In use, articles to be presented, e.g. loins of meat to be presented for cutting by an adjacent band saw blade (8) are loaded onto the apparatus, and the sliding member or members are moved radially, generally outwardly, in coordination with rotation of the rotatable member to present the articles a predetermined distance on each revolution, thus presenting e.g. a predetermined thickness of meat to the band saw blade to produce a cut portion of meat of the predetermined thickness.

Fig. 2

EP 0 137 642 A2

Title: Method and Apparatus for Presenting Articles

DESCRIPTION.

Field of invention.

This invention relates to a method and apparatus for presenting articles, and is concerned particularly, but not exclusively, with a method and apparatus suitable for presenting meat for cutting.

Background to the invention.

In the meat industry cuts of meat involving bone, such as loins, are generally cut by a band saw. Using a conventional band saw involves the operator in some danger, because it is necessary for him to have his hands very close to the band saw blade, and furthermore some judgement is required to get even cuts.

Summary of the invention.

According to one aspect of the present invention there is provided a presenting apparatus comprising a rotatable member, at least one sliding member mounted on the surface of said rotatable member, and arranged to be reciprocated radially with respect to the axis of rotation of the rotatable member, driving means associated with the sliding member, said driving means being arranged to advance or retract the sliding member such that an article to be presented situated on the surface of the rotatable member, can be advanced or withdrawn by said sliding member, relative to the perimeter of said rotatable member.

In a further aspect the present invention provides a method of presenting an article, said method comprising the steps of locating an article on a rotatable member, and advancing said article towards the perimeter of the rotating member for the purpose of presenting said article at the perimeter of said rotating member.

The rotatable member conveniently comprises a rotatable plate, preferable of circular configuration. The rotatable member may be of any suitable material bearing in mind the intended purpose of the apparatus, with metal, e.g. stainless steel, being suitable for apparatus for use in presenting meat to be portioned.

The rotatable member is conveniently mounted on a drive shaft arranged to be rotated by drive means, e.g. a motor such as a hydraulic motor.

Preferably several, e.g. four or five, similar sliding members are provided, symmetrically located with respect to the rotatable member.

Respective guide means secured to the surface of the rotatable member may be associated with the or each sliding member.

In general, it will be desired to present articles radially outwardly with respect to the axis of rotation of the rotatable member, so the driving means will generally be arranged to move the associated sliding member at least in a radially outward direction. The driving means may also be arranged to cause movement of the sliding member(s) in the reverse direction for resetting, or the sliding member(s) may be manually reset.

The sliding member or members are moved in coordination with rotation of the rotatable member, being moved a predetermined amount for each revolution of the rotatable member. The amount moved for each revolution is preferably adjustable. The sliding member or members may be moved in indexed manner.

The driving means for the sliding member(s) may be operated independently of the drive means for the rotatable member, under control of suitable control means, or may be associated therewith, e.g. by a suitable mechanical linkage.

The or each sliding member conveniently comprises a member extending through an associated radial guide slot in the rotatable member, the member having a portion upstanding from one side of the rotatable member for engaging and pushing articles to be presented. The associated driving means is conveniently located on the opposed side of the rotatable member.

The driving means associated with each sliding member conveniently comprises a slidable member mounted for movement on a radially extending shaft located on the opposed side of the slot in the rotatable member.

The slidable member may comprise a Transtwist linear actuator which is slidable on the associated shaft and which can be reciprocated linearly thereon on rotation of the shaft. Alternatively, the slidable member may be mounted with respect to a threaded shaft and reciprocated relative thereto as a result of rotation of the shaft.

The slidable member may be operated by an independent drive mechanism which may be powered by a hydraulic cylinder or the like operable to effect rotation of the shaft so that the slidable member, and hence the associated sliding member, move forward a desired increment. Alternatively a drive mechanism may operate directly on the slidable member.

In one preferred arrangement, the slidable member comprises a pair of split pusher blocks mounted on a threaded shaft. A drive sprocket is secured to the shaft, to cause rotation of the shaft in response to rotation of the rotatable member, via an advancing ring secured to the table. The advancing ring is adjustable to control the amount of rotation of the sprocket caused by each revolution of the rotatable member. This is achieved by the advancing ring including a portion with a series of radially directed slots, each with an associated drive pin moveable between an advanced, e.g. raised, drive position in which it is engaged by and causes rotation of the sprocket and a retracted, e.g. lowered, position in which no rotation of the sprocket occurs. By adjustment of the drive pins, the amount of rotation of the shaft and hence movement of the slidable member can be varied.

The split pusher blocks are conveniently manually releasable from engagement with the thread, to permit

- 5 -

manual movement of the blocks relative to the thread, e.g. for resetting.

In embodiments employing a slidable member mounted for movement on a threaded shaft, the shaft preferably includes an unthreaded outer end portion onto which the slidable member can run, becoming disengaged from the thread. This allows for the sliding members to be advanced independently regardless of the initial starting positions.

In use of apparatus in accordance with the invention, articles to be presented, e.g. meat loins to be cut, are loaded on the rotatable member in advance of the or each sliding member in suitable orientation. The rotatable member is rotated, and the or each sliding member is advanced by a predetermined amount on each revolution, presenting articles outwardly, e.g. presenting a predetermined thickness of loin to be cut by an adjacent band saw.

It will be apparent that where the apparatus is used to present articles to a band saw it will eliminate the need for an operator to have his hands close to the moving band saw blade, and furthermore will present articles to be cut in a regular and uniform manner.

The present invention also includes within its scope a band saw having associated therewith presenting apparatus in accordance with the invention.

The invention will be further described, by way of example, with reference to the accompanying drawings, in which:-

Figure 1 is a diagramatic top plan view of one embodiment of apparatus in accordance with the invention;

Figure 2 is a side view of the apparatus of Figure 1;

Figure 3 is a part sectional view, shown to an enlarged scale, of part of an advancing mechanism of a preferred embodiment of apparatus in accordance with the invention, with parts omitted for clarity;

Figure 4 is a part sectional view, to a further enlarged scale, of part of the arrangement shown in Figure 3;

Figure 5 shows on yet a further enlarged scale part of a sprocket shown in Figures 3 and 4;

Figure 6 is a plan view of an advancing ring shown in Figure 4 at a slightly reduced scale as compared with the scale of Figure 4; and

Figure 7 shows on a further reduced scale an adjusting arm for adjusting the advancing mechanism illustrated in Figures 3 to 6.

Detailed description of the drawings.

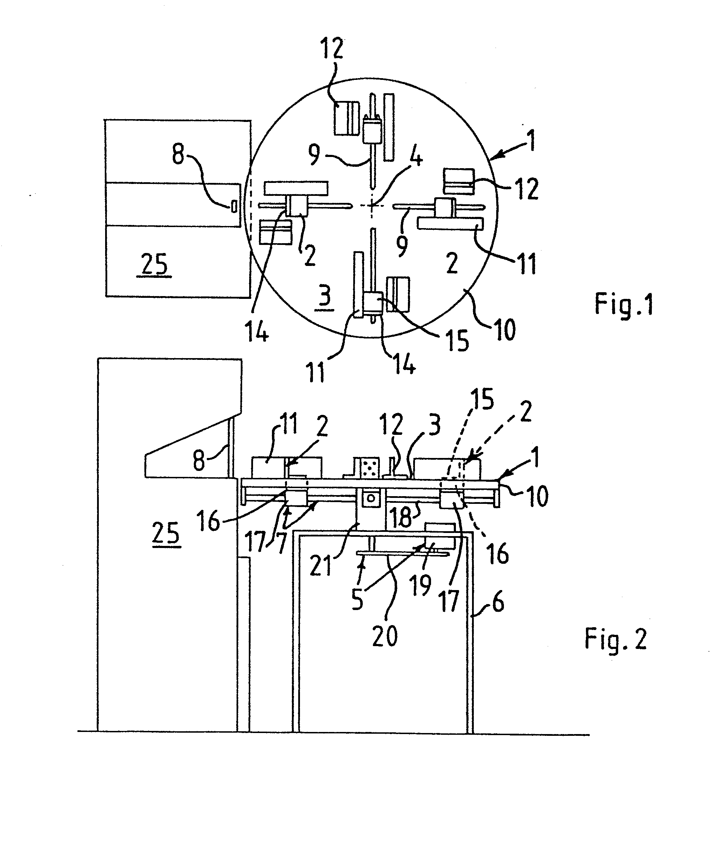

Referring to the drawings, Figures 1 and 2 illustrate one embodiment of presenting apparatus comprising a rotary feed table system designed for use in presenting cuts of meats such as loins for cutting, the apparatus being shown in conjunction with a conventional band saw 25 having saw blade 8.

The presenting apparatus comprises a rotary table 1 having a stainless steel circular table top 3, the table being mounted to a frame 6 and being arranged for rotation about axis 4 under the action of driving means generally designated 5.

Four similar meat advancing arrangements are located symmetrically on the upper surface of the table top, for moving meat to be cut in a radially outward direction with respect to axis 4, and so presenting meat to the band saw blade 8 for cutting.

Each meat advancing arrangement comprises a sliding pusher member 2 mounted in a radially directed slot 9 extending through the table surface, the sliding pusher member being arranged through radially reciprocating movement along the length of the slot. The member 2 passes through the associated slot 9 and includes an L-shaped portion having a horizontal base limb 15 and a vertical contact limb 14 both located on or above the table at the surface, the vertical limb being arranged to contact and move meat in a radial direction. The member 2 also includes a lower portion 16 passing through the slot and linked below the table top to driving means generally designated 7.

An L-shaped elongate guide 11 is located on one side of the slot 9, extending parallel thereto, with a clamping member 12 located on the other side of the slot 9, for guiding articles being moved radially by member 2.

Details of the advancing arrangements may be modified as appropriate, depending on factors including the nature of articles to be presented by the apparatus, it being understood that the apparatus may be used to present articles other than meat for other purposes in industry. For example, the configurations of the guide 11 clamping member 12 and slidable member 2 may all be modified. Further, the number of advancing arrangements may be varied e.g. five similar symmetrically located advancing arrangements may be employed.

The driving means 5 for causing rotation of the table 1 comprises a motor 19, which may be a hydraulic motor, mounted to the frame 6 and arranged to drive the table via a belt drive 20 and a reduction box 21, the latter possibly including a clutch (not shown).

It will be appreciated that alternative driving means for causing rotation of the table may also be employed, such details being immaterial to the invention.

The sliding member advancing mechanism driving means 7 will now be described in more detail. The lower part 16 of the sliding member 2 is fixed with respect to a slidable member 17 mounted for sliding movement on a radially extending shaft 18 located below the slot, the shaft 18 being fixed with respect to the central portion of the table and a downwardly depending flange at the table periphery 10. The slidable member 17 is arranged to be driven radially on shaft 18 by drive means (not shown), causing corresponding radial movement of sliding member 2.

The four slidable members 17 and hence associated sliding members 2, are arranged to be moved radially outwardly in coordination with rotation of the table 1. Accordingly, each slidable member 2 presents to the band saw a piece of meat protruding by a predetermined amount, resulting in production of cut portions of meat of predetermined thickness. The magnitude of the movements is preferably adjustable to permit variation of thickness of cut, e.g. in the range of 6mm to 50mm.

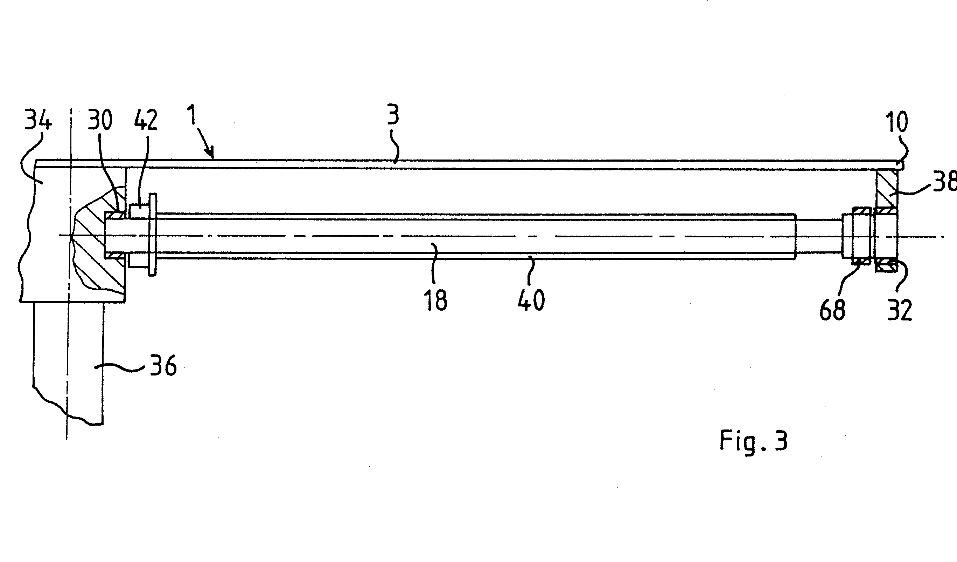

A preferred advancing mechanism for achieving this effect will be described below with reference to Figures 3 to 7.

In use of the illustrated arrangement, the four sliding members 2 are initially located in radially innermost end positions. A plurality of pieces, e.g. loins, of meats to be cut are lined up in each meat advancing arrangement, radially outward of member 2, located between this member, guide 11 and clamping member 12, the meat being appropriately orientated for cutting by band saw blade 8.

Table driving means 5 is actuated, causing rotation of the table, and meat advancing arrangements carried thereby, at a constant rate, e.g. 20 rpm. On each revolution of the table, each sliding member 2 is moved radially outward by a preset amount, under the action of driving means 7, to present to the blade 8 a protruding portion of meat of predetermined thickness. The thickness will typically be adjusted in the range 6mm to 50mm. Chops or the like of this thickness are cut on movement past the blade, and are collected on a conveyor (not shown) or other arrangement to be conveyed away for further processing e.g. packing. After all meat has been cut, the machine is stopped and the sliding members returned to the initial positions ready for reloading and reuse.

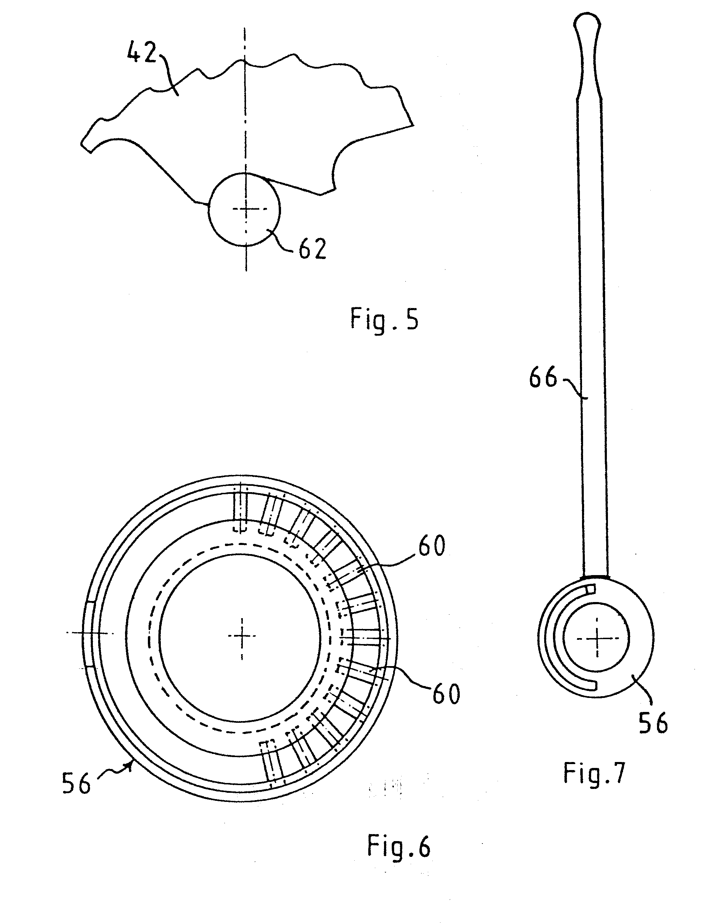

The preferred advancing mechanism is illustrated in Figures 3 to 7. Figure 3 shows a portion of the table 1 with one of the shafts 18 located below a radial slot 9 (not shown). Shaft 18 is mounted for axial rotation, the ends of the shaft being received in respective bushes 30 and 32 fixed with respect to an upper portion 34 of the table drive shaft 36, and to flange 38 depending from the periphery 10 of the table. The shaft 18 is threaded over the major part of its length, as indicated at 40, with unthreaded end portions received in the bushes.  An advance sprocket 42 having 12 teeth of the configuration shown in Figure 5 is located adjacent in a bush 30, and is fixed in rotation to the shaft.

A pair of split pusher blocks (not shown in Figure 3 but represented by component 17 in Figure 2) is mounted on the threaded portion of the shaft 18, and is fixed with respect to the lower portion 16 of the associated sliding member 2 which extends upwardly through the associated slot 9, so that rotation of shaft 18 causes radial movement of the associated sliding member 2.

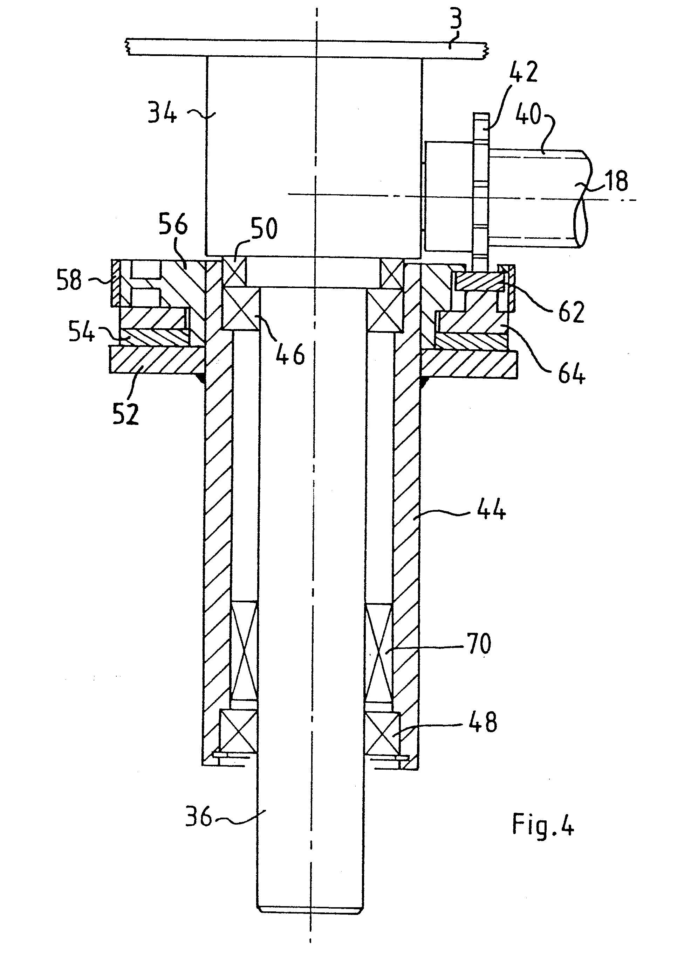

Figure 4 shows in greater detail the table drive shaft 36 and associated components of the advanced mechanism, which is arranged to cause rotation of shaft 18 as the table 1 revolves, via the action of advance sprocket 42.

Shaft 36 is mounted for rotation within a cylindrical housing 44, via bearings 46 and 48.  An annular wiper seal 50 is located between the upper bearing 46 and the shaft portion 34.  A support ring 52 is fixed to the outside of the housing 44 with an associated soft rubber ring 54 located thereon.  An advancing ring 56 (also shown in Figure 6) is fixed with respect to the housing, above ring 52.  An outer sleeve ring 58 is secured around the upper periphery of ring 56.

The configuration of advancing ring is best seen in Figure 6.  The ring includes a part circular slotted portion extending over just under half of the circumference of the ring, including a series of 12 radial slots 60, each slot having an associated drive pin 62 (Figure 4).  Each pin may be selectively positioned in a raised position by the action of a lifting cam 64 (see Figure 4) or a lowered
position.

In the raised position the drive pin 62 is engaged by the
teeth of advance sprocket 42 (see Figure 5) causing
rotation of the shaft by 30°. In contrast, in the lowered
position pin 62 does not mesh with the sprocket 42 and no
rotation of shaft 18 is caused. It will thus be clear
that by varying the positions of the twelve drive pins 62
between raised and lowered positions, the shaft 18 will be
caused to rotate on rotation of table 1 by an amount
variable in 30° steps between 0° and 360°. In this way
the amount of advancement of the split pusher blocks and
hence sliding member 2 on each revolution of the table 1
can be adjusted.

Adjustment of the lifting cam 64 is effected using an
adjusting arm 66 as shown in Figure 7.

Each sliding member 2 has a similar shaft 18, advance
sprocket 42 etc., associated therewith, which all
cooperate with the single advancing ring 56 on rotation of
table 1. Each member 2 is thus advanced by the same
amount on one revolution of the table.

When the split pusher blocks are fully advanced radially
outwardly on shaft 18 and reach the outer limit of travel,
they run off the threaded portion 40 and become
disengaged. This feature allows for all sliding members 2
to be advanced independently, regardless of their starting
positions.

A sleeve 68 on the outer end of shaft 18 acts as an end
stop, limiting movement of the split block after they have

- 12 -

run off the thread. Sleeve 68 also limits the end movement of the shaft 18 and improves accuracy of the machine.

The split pusher blocks are reset manually by being disengaged from the thread by squeezing a lever mechanism (not shown), and are then manually moved radially inwardly with respect to shaft 18 to the desired starting position.

An anti run-back device 70 is associated with the table drive shaft to prevent the split pusher blocks contacting the advancing ring and possibly causing damage.

Claims:

1. Presenting apparatus comprising a rotatable member (1); at least one sliding member (2) mounted on the rotatable member and arranged to be reciprocated radially with respect to the axis (4) of rotation of the rotatable member; and driving means (7) associated with the sliding member, said driving means being arranged to advance or retract the sliding member such that an article to be presented situated on the rotatable member can be advanced or withdrawn by said sliding member relative to the perimeter of the rotatable member.

2. Apparatus according to claim 1, characterised in that a plurality of similar sliding members (2) are mounted on the rotatable member, arranged symmetrically with respect to said axis (4).

3. Apparatus according to claim 1 or 2, characterised in that respective guide means (12, 13) is associated with the or each sliding member.

4. Apparatus according to any one of the preceding claims, characterised in that the or each sliding member (2) comprises a member (16) extending through an associated radial guide slot (9) in the rotatable member, the sliding member having a portion (14, 15) upstanding from one side of the rotatable member, with the driving means (7) for the sliding member being located on the opposed side of the rotatable member.

5. Apparatus according to claim 4, characterised in that the driving means (7) comprises a slidable member (17) mounted for movement on a radially extending shaft (18).

6. Apparatus according to claim 5, characterised in that the shaft (18) is threaded (40), rotation of the shaft causing sliding movement of the slidable member (17) along the shaft.

7. Apparatus according to claim 6, characterised in that the shaft (18) includes an unthreaded outer end portion onto which the slidable member (17) moves at the end of its travel, becoming disengaged from the thread.

8. Apparatus according to claim 6 or 7, characterised in that a drive sprocket (42) is secured to the shaft, the drive sprocket cooperating with an advancing ring (56) secured with respect to the rotatable member (1) to cause rotation of the shaft (18) on rotation of the rotatable member.

9. Apparatus according to claim 8, characterised in that the advancing ring (56) includes a plurality of radially directed slots (60), each with an associated drive pin (62) moveable between an advanced, drive position in which it is adaptd to be engaged by and cause rotation of the sprocket (42) and a retracted position in which no rotation of the sprocket occurs so that the amount of rotation of the sprocket caused by each revolution of the rotatable member is adjustable.

10. A method of presenting an article, characterised by locating an article on a rotatable member (1), causing rotation of the rotatable member about an axis (4), and moving said article radially with respect to the axis of

- 15 -

rotation in coordination with the rotation of the
rotatable member.

Fig.1

Fig. 2

Fig. 3

3/4

Fig.4

42

62

Fig.5

60

60

56

Fig.6

66

56

Fig.7